# FASCICULE DE BREVET EUROPEEN

(11) **EP 2 703 220 B1**
(45) Date de publication et mention de la délivrance du brevet: **21.12.2016**
(21) Numéro de dépôt: 13179627.8
(22) Date de dépôt: 07.08.2013
(51) Int. Cl.: B60Q 3/00, F21S 8/10, F21V 8/00, F21W 101/14

(54) **Dispositif lumineux d'éclairage et/ou de signalisation pour véhicule automobile**
Vorrichtung zur Beleuchtung und/oder Signalisierung für Kraftfahrzeug
Lighting and/or signalling device for an automobile

(30) Priorité: 29.08.2012 FR 1258076
(43) Date de publication de la demande: 05.03.2014
(73) Titulaire: VALEO VISION, 93012 Bobigny Cedex (FR)
(72) Inventeur: Dubosc, Christophe, 93250 VILLEMOMBLE (FR)

(56) Documents cités:
- EP-A1- 1 895 228
- GB-A- 2 476 933
- US-A1- 2005 270 802
- US-A1- 2008 025 688
- US-A1- 2010 085 771
- US-A1- 2012 212 931
- US-B1- 6 398 988

## Description

La présente invention a pour objet un dispositif lumineux d'éclairage et/ou de signalisation pour véhicule automobile. Elle trouvera ses applications, par exemple, comme lanterne et/ou feu de stop de véhicule.

Dans le domaine de l'éclairage et de la signalisation des véhicules automobiles, il est de plus en plus fréquent d'utiliser des guides optiques. Un guide optique est, très schématiquement, un élément allongé de matière transparente, généralement sous forme d'un cordon ou d'une nappe. A proximité de l'une des extrémités ou bords du guide, appelée face d'entrée du guide, est disposée une source lumineuse, par exemple du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide sort par une face dite face avant du guide grâce à la présence de motifs optiques réfléchissants disposés sur une face dite face arrière du guide, opposée à la précédente. Le guide émet ainsi de la lumière à partir desdits motifs optiques.

De tels dispositifs présentent l'avantage de pouvoir prendre des formes géométriques très variées, par exemple être rectiligne ou en arc de cercle pour les guides en forme de cordon ou encore cintré pour les guides en forme de nappe. Ils permettent de la sorte de disposer d'une surface éclairante même dans des zones peu accessibles à des projecteurs ou feux classiques. Ils participent ainsi fortement au style du véhicule.

Cela étant, ils émettent une lumière selon une direction privilégiée. Il est ainsi délicat d'assurer un aspect homogène du guide quel que soit l'angle de vision que l'on a du guide, en raison de la répartition angulaire insuffisamment large de la lumière sortant dudit guide. On a d'ailleurs tendance à concevoir le guide de façon à ce qu'il éclaire principalement dans l'axe du véhicule afin de répondre aux normes photométriques. Pourtant, il s'avère important d'avoir un aspect allumé homogène et agréable visuellement également quand l'observateur s'écarte de l'axe longitudinal du véhicule.

Il est par ailleurs connu des guides optiques munis de motifs optiques permettant une diffusion de lumière de façon lambertienne, c'est-à-dire, dans toutes les directions de l'espace. Les feux équipés sont donc visibles selon un grand angle de vue. Les valeurs photométriques qu'ils permettent d'atteindre sont cependant limitées.

Pour pallier les inconvénients de ces différents types de guides, une première solution serait de les superposer mais cette solution est peu pratique car elle nécessite de disposer d'un volume important pour loger les différents guides alors même que, comme dit plus haut, l'on souhaite pouvoir loger les feux ou projecteurs équipés dans un encombrement réduit. Le rendu esthétique d'une telle solution, notamment feu éteint, risquerait également d'être peu satisfaisant.

L'invention a pour but de pallier les inconvénients précités et propose à cette fin un dispositif lumineux comme défini dans la revendication 1 d'éclairage et/ou de signalisation pour véhicule automobile, ledit dispositif comportant une source lumineuse, apte à émettre un faisceau lumineux, et un guide optique, configuré pour permettre la propagation dudit faisceau lumineux dans ledit guide, ledit guide comportant :
- une face de sortie de la lumière ;
- une pluralité de motifs optiques de réflexion de fractions, dite dirigées, du faisceau lumineux à travers la face de sortie, selon une direction privilégiée ; et
- une pluralité de motifs optiques de diffusion de fractions, dite diffusées, du faisceau lumineux à travers la face de sortie.

Autrement dit, les fractions diffusées sont distinctes des fractions dirigées. Par ailleurs, lesdits motifs optiques sont configurés de façon à ce qu'un effet optique desdites fractions dirigées et diffusées se superpose. Encore autrement dit, le guide comporte des moyens réfléchissants et des moyens diffusant, qui sont en fait des moyens de découplage, et qui sont répartis de façon à ce que leurs effets se conjuguent, ces moyens de découplage permettant d'obtenir simultanément la photométrie voulue, en particulier dans la direction nécessaire, par exemple dans l'axe du véhicule, et un angle de visibilité élargie.

On dispose de la sorte d'un guide de lumière amélioré qui permet d'avoir un aspect éclairé plus homogène, tout particulièrement dans une large plage d'angles d'incidence de vision, tout en atteignant de fortes valeurs photométriques. Son rendu esthétique, à la fois allumé et éteint, est également avantageux.

Selon différentes aspects de l'invention qui pourront être pris ensemble ou séparément :
- lesdits motifs de réflexion alternent avec lesdits motifs de diffusion,
- les motifs optiques de diffusion (22) sont formés à côté des motifs optiques de réflexion,
- lesdits motifs optiques de réflexion et/ou lesdits motifs optiques de diffusion sont, respectivement, disposés en quinconce,
- lesdits motifs de réflexion et/ou lesdits motifs de diffusion sont positionnés de façon matricielle,
- une matrice des motifs optiques de réflexion et une matrice des motifs optiques de diffusion sont imbriquées l'une dans l'autre,
- les motifs optiques de diffusion sont formés sur les motifs optiques de réflexion,
- lesdits motifs de réflexion et/ou de diffusion sont formés par une dépression de matière dudit guide,
- lesdits motifs de réflexion et/ou de diffusion sont formés par une surépaisseur de matière dudit guide,
- ledit guide est constitué d'une nappe de guidage comprenant une première face formant ladite face de sortie desdites fractions dirigées et diffusées, et une seconde face, opposée à ladite face de sortie, formant une face de réflexion du faisceau lumineux,
- lesdits motifs optiques de réflexion et/ou de diffusion sont situés au niveau de ladite face de réflexion,
- lesdits motifs optiques de réflexion comprennent des prismes réfléchissant formés dans ledit guide,
- lesdits motifs de diffusion comprennent des altérations localisées dudit guide.

Selon un premier mode de mise en oeuvre de ce dernier aspect de l'invention, les altérations sont en forme de creux formés dans le guide. Lesdits creux présentent, par exemple, une pluralité de micro-aspérités sur au moins une partie de leur surface. Les micro-aspérités pourront présenter des formes aléatoires.

Les altérations peuvent être obtenues par exemple directement lors du moulage du guide. En variante, ces altérations peuvent être obtenues par un post-traitement du type traitement par rayonnement laser, par exemple par gravure laser.

Par exemple, les creux ont une surface apparente comprise entre 0,05 et 5 mm2, notamment comprise entre 0,1 et 1 mm2. Il peut être prévu que les creux aient une profondeur maximale comprise entre 0,001 et 2 mm, notamment entre 0,01 et 1 mm, ou de l'ordre d'une ou plusieurs dizaines de microns.

Selon un autre mode de mise en oeuvre, les motifs de diffusions sont imprimés sur le guide. Lesdits motifs de diffusions comprennent, par exemple, une couche d'encre diffusive.

L'invention concerne également, une lanterne, ou feu de positionnement, et/ou un feu de stop de véhicule automobile comprenant un tel dispositif lumineux. Il pourra encore s'agir d'un éclairage intérieur du véhicule, en particulier plafonnier, entre autres applications dudit dispositif.

L'invention sera décrite en détails à l'aide d'un exemple de réalisation non limitatif, illustré par les figures suivantes :
La figure 1 représente de façon partielle, en vue de coupe, un exemple de réalisation d'un dispositif lumineux conforme à l'invention.
La figure 2 est une vue partielle, en perspective, du dispositif lumineux de la figure 1.
La figure 3 est une vue partielle de dessus d'un autre mode de réalisation du dispositif lumineux conforme à l'invention.

Ces figures sont très schématiques et ne respectent pas nécessairement l'échelle pour en faciliter la lecture.

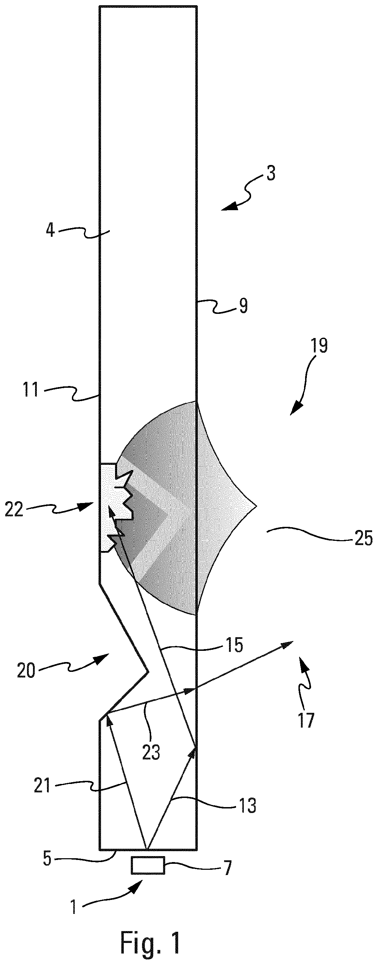

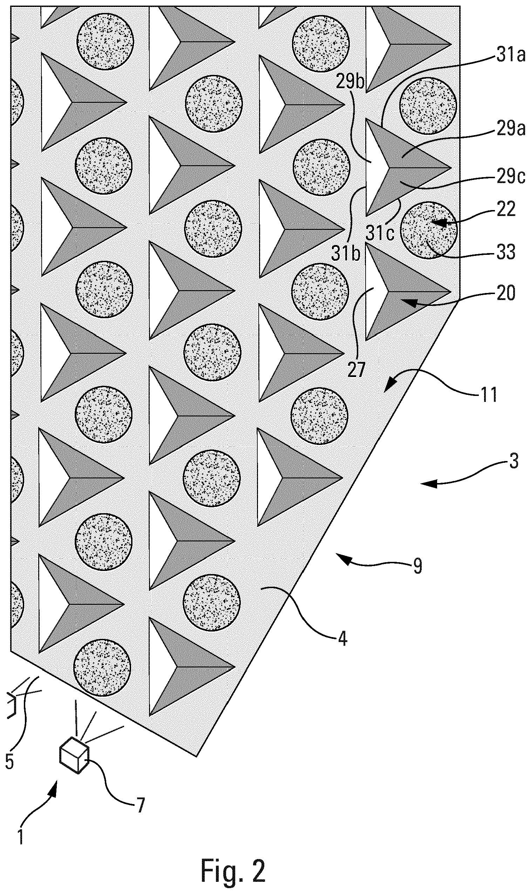

Comme illustré aux figures 1 et 2, l'invention concerne un dispositif lumineux, notamment d'éclairage et/ou de signalisation pour véhicule automobile.

Ledit dispositif comporte une source lumineuse 1, apte à émettre un faisceau lumineux, et un guide optique 3 configuré pour permettre la propagation dudit faisceau lumineux dans ledit guide 3.

Ledit guide optique 3 est, dans cet exemple, constitué d'une nappe 4 de guidage, plane. On entend par là que ledit guide 3 présente une épaisseur très largement inférieure à ses autres dimensions.

Il est bien entendu que le guide optique selon l'invention peut avoir d'autres formes comme, par exemple, comporter des courbures. Il pourra encore s'agir d'un guide de type en cordon, rectiligne, présentant une ou plusieurs portions d'arc de cercle et/ou d'autres formes.

Dans ce mode de réalisation, le guide optique 3 est à base de polymère transparent en polycarbonate (ou polymétacrylate de méthyle PMMA), de préférence de qualité cristal.

Ce guide optique 3 présente ici une face dite d'entrée 5, constituée de l'un des bords dudit guide, et une face terminale, constituée d'un bord opposé, non-visible, dudit guide 3.

Ladite source lumineuse 1 comprend, par exemple, une pluralité de diodes électroluminescentes 7, disposées selon la face d'entrée 5 dudit guide 3. Une seule desdites diodes 7 est visible à la figure 1, compte-tenu de l'orientation de la figure. La face terminale pourra être dépourvue de source lumineuse. Optionnellement, il est possible de prévoir une seconde source lumineuse le long dudit bord opposé du guide 3.

Ledit guide 3 comporte en outre deux faces principales, à savoir une première face 9 constituant une face de sortie des rayons lumineux propagés dans le guide optique 3 et une deuxième face 11, opposée à la première face 9, constituant une face de réflexion desdits rayons lumineux. La lumière émise par la source lumineuse se propage entre lesdites première et deuxième faces 9, 11 en étant réfléchie à l'intérieur du guide 3 au niveau desdites première et deuxième faces 9, 11. Comme illustré par la flèche repérée 13, un rayon lumineux du faisceau émis par la source lumineuse 1 vient frapper ladite surface de sortie 9 selon un angle d'incidence trop grand par rapport à la normale à la dite face de sortie 9 pour être transmis en dehors dudit guide 3. Il est ainsi totalement réfléchi à l'intérieur dudit guide 3 en un rayon 15.

Cela étant, selon l'invention, ledit dispositif comporte une pluralité de motifs optiques 20 de réflexion de fractions 17, dite dirigées, du faisceau lumineux en dehors dudit guide 3, selon une direction privilégiée, et une pluralité de motifs optiques 22 de diffusion de fractions 19, dite diffusées, du faisceau lumineux en dehors dudit guide 3. Lesdits motifs optiques 20, 22 sont en particulier configurés de façon à ce qu'un effet optique desdites fractions dirigées et diffusées, prévues distinctes, se superpose. On dispose de la sorte d'un faisceau émis par ledit guide 3 présentant à la fois un niveau photométrique avantageux et un large angle de vue, ledit guide 3 offrant un aspect homogène à la fois allumé et éteint.

Selon le mode de réalisation illustré, ledit guide 3 est réalisé sous la forme d'une nappe. On entend par là que ledit guide est sensiblement bidimensionnel, c'est-à-dire avec une plus faible épaisseur au regard de sa longueur et de sa largeur, ledit guide pouvant être incurvé pour adopter un galbe donné. La zone de propagation de la nappe est délimitée verticalement par une face de guidage supérieure et une face de guidage inférieure. Les deux faces de guidage sont parallèles de manière à ce que la zone présente une épaisseur verticale constante qui est faible par rapport à ses dimensions longitudinale et transversale.

Lesdits motifs optiques de réflexion 20 et/ou de diffusion 22 sont situés au niveau de ladite face de réflexion 11. Quant à la face de sortie 9 des rayons lumineux, elle permet la sortie desdites fractions dirigées et diffusées.

Plus précisément, un rayon lumineux 21, arrivant sur l'un des motifs de réflexion 20 est réfléchi en un rayon lumineux 23 selon une direction présentant un angle suffisamment faible avec la normale par rapport à ladite surface de sortie 9 pour sortir dudit guide 3.

De même, une partie des rayons lumineux arrivant sur l'un des motifs de réflexion 22, tel que le rayon lumineux 15 déjà évoqué, est diffusée selon une direction présentant un angle suffisamment faible avec la normale par rapport à ladite surface de sortie 9 pour sortir dudit guide 3, selon un halo de lumière 25.

A la figure 1, seul l'un desdits motifs de réflexion 20 et seul l'un desdits motifs de diffusion 22 on été représentés pour ne pas alourdir la figure.

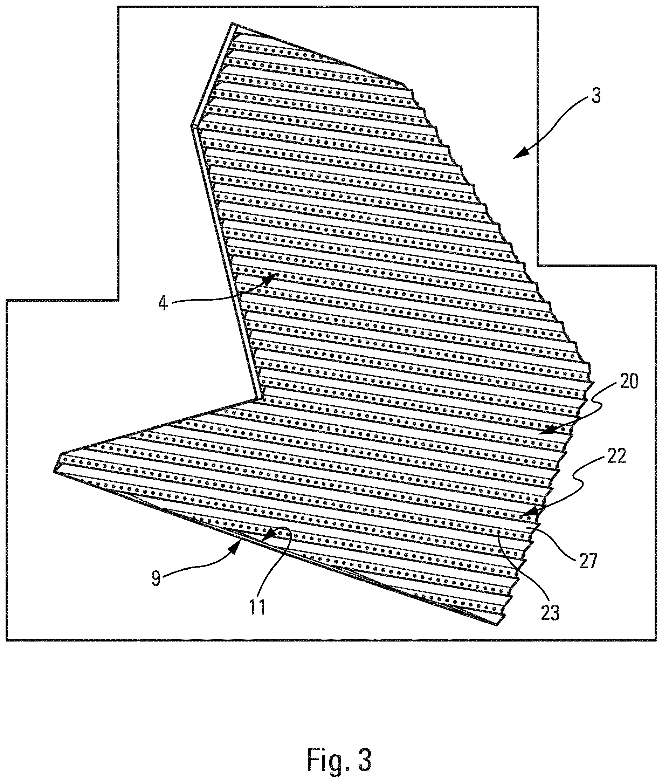

Comme cela est plus particulièrement visible aux figures 2 et 3, lesdits motifs de réflexion 20 alternent avec lesdits motifs de diffusion 22, à la surface du guide 3. On assure de la sorte la combinaison des effets optiques desdits motifs 20, 22.

Selon ces figures, les motifs optiques de réflexion 20 et les motifs optiques 22 de diffusion sont décalés les uns des autres. Ils sont, notamment, régulièrement espacés.

On pourra noter que ledit guide 3 présente un état de surface permettant de considérer que ledit guide 3 dispose d'une surface lisse entre lesdits motifs de réflexion 22.

A la figure 2, lesdits motifs de réflexion 20 et/ou lesdits motifs de diffusion 22 pourront être positionnés de façon matricielle, par exemple en quinconce. Ici, on observe qu'une matrice des motifs optiques de réflexion 20 et une matrice des motifs optiques de diffusion 22 sont imbriquées l'une dans l'autre. Lesdits motifs de réflexion 20 et/ou lesdits motifs de diffusion 22 présentent, par exemple, des dimensions de côté de l'ordre du dixième de millimètre, environ 0,5 mm.

Lesdits motifs optiques de réflexion 20 comprennent, par exemple, des foyers optiques ou prismes réfléchissant 27 formés dans ledit guide 3. Ils sont ici de forme pyramidale, notamment de base triangulaire. Chaque prisme comprend ainsi trois faces 29a, 29b, 29c muni chacune d'une arrête 31 a, 31 b, 31 c les reliant à la partie lisse de la face du guide 3. Grâce à l'angle donnée auxdites faces 29a, 29b, 29c des prismes par rapport à ladite partie lisse de la face du guide 3, une partie au moins des rayons lumineux incidents interceptés par les faces 29a, 29b, 29c des prismes est déviée selon une direction leur permettant de sortir dudit guide 3 au niveau de ladite face de sortie 9, ceci selon une direction privilégié, à savoir la normale à ladite surface de sortie 9.

Lesdits motifs de diffusion 22 comprennent, par exemple, des altérations localisées 33 dudit guide 3. Pour la réalisation de telles altérations 33, on peut notamment se reporter aux indications donnés plus haut aini qu'à la description des motifs optiques décrits dans le brevet EP 1 434 000.

Les rayons lumineux interceptés par lesdites altérations 33 sont diffusés avec une distribution lambertienne dans le guide 3 pour sortir dudit guide 3 par ladite face de sortie 9, en s'ajoutant aux rayons issus des motifs optiques de réflexion 20.

Ici, lesdits motifs optique de diffusion 22 sont sensiblement situés au centre d'un triangle virtuel défini par le prolongement des arrêtes 31 a, 31 b, 31 c des faces 29a, 29b, 29c de prismes pyramidaux voisins.

Selon une variante, illustré à la figure 3, lesdits prismes 27 sont de forme allongée, notamment de section triangulaire, formant des stries à la surface dudit guide 3, lesdites stries alternant avec des rangées d'altérations 23, localisées.

Selon une autre variante, non illustrée, les motifs optiques de diffusion 22 sont formés sur les motifs optiques de réflexion 20. Lesdits motifs de diffusion 22 pourront être situés, par exemple, sur l'une et/ou les faces 29a, 29b, 29c desdits prismes pyramidaux. Un simple grainage de la ou desdites faces 29a, 29b, 29c suffit alors pour assurer la diffusion lumineuse recherchée.

De façon avantageuse, lesdits motifs de réflexion 20 et/ou de diffusion 22 sont formés par une surépaisseur de matière dudit guide. Un tel mode de réalisation permet de faciliter la réalisation du moule de fabrication du guide dans lequel lesdits motifs pourront être réalisés en négatif, notamment par usinage de la cavité de moulage pour ce qui est des motifs de réflexion 20 et/ou par impact ou gravage laser de ladite cavité de moulage pour ce qui est des motifs de diffusion 22.

Bien naturellement, un tel mode de réalisation n'est pas limitatif et lesdits motifs de réflexion 20 et/ou de diffusion 22 pourront être réalisés, en totalité ou en partie, sous forme de creux par rapport à la partie de la surface substantiellement lisse dudit guide 3, comme cela est le cas figure 1.

L'invention concerne également une lanterne et/ou feu de stop de véhicule automobile comprenant un dispositif lumineux tel que décrit plus haut. Cela étant, ledit dispositif pourra aussi être utilisé dans des feux clignotants et/ou pour l'éclairage intérieur de l'habitacle du véhicule.

Ledit guide 3 et ladite source lumineuse 1 sont disposés dans un boîtier fermé par une glace laissant voir ledit guide 3, en tout ou partie.

Bien naturellement, en fonction de la place disponible, il pourra être utilisé plusieurs guides optiques selon l'invention dans un même dispositif lumineux, lesdits guides étant alimentés par une même et/ou des sources lumineuses distinctes.

## Revendications

1. Dispositif lumineux d'éclairage et/ou de signalisation pour un véhicule automobile, ledit dispositif comportant une source lumineuse (1), apte à émettre un faisceau lumineux, et un guide optique (3), configuré pour permettre la propagation dudit faisceau lumineux dans ledit guide (3), ledit guide comportant :
- une face de sortie de la lumière ;
- une pluralité de motifs optiques (20) de réflexion de fractions (17), dite dirigées, du faisceau lumineux à travers la face de sortie, selon une direction privilégiée ; et
- une pluralité de motifs optiques (22) de diffusion de fractions (19), dite diffusées, du faisceau lumineux à travers la face de sortie,
les fractions diffusées étant distinctes des fractions dirigées, le dispositif étant **caractérisé en ce que** lesdits motifs optiques sont des moyens réfléchissants et des moyens diffusant, qui sont en fait des moyens de découplage, et qui sont répartis de façon à ce que leurs effets se conjuguent, ces moyens de découplage permettant d'obtenir simultanément la photométrie voulue, en particulier dans la direction nécessaire, par exemple dans l'axe du véhicule, et un angle de visibilité élargie ; et **en ce que** ledit guide et ladite source lumineuse sont disposés dans un boîtier fermé par une glace laissant voir ledit guide, en tout ou partie.

2. Dispositif selon la revendication 1 dans lequel lesdits motifs de réflexion (20) alternent avec lesdits motifs de diffusion (22).

3. Dispositifs selon l'une quelconque des revendications 1 ou 2 dans lequel lesdits motifs de réflexion (20) et/ou de diffusion (22) sont formés par une dépression de matière dudit guide (3).

4. Dispositif selon l'une quelconque des revendications précédentes dans lequel les motifs optiques de diffusion (22) sont formés à côté des motifs optiques de réflexion (20).

5. Dispositif selon l'une quelconque des revendications 1 à 3 dans lequel les motifs optiques de diffusion (22) sont formés sur les motifs optiques de réflexion (20).

6. Dispositif selon l'une quelconque des revendications précédentes dans lequel ledit guide (3) est constitué d'une nappe de guidage (4) comprenant une première face formant ladite face de sortie (9) desdites fractions dirigées (17) et diffusées (19), et une seconde face (11), opposée à la face de sortie (9), formant une face de réflexion du faisceau lumineux, lesdits motifs optiques de réflexion (20) et/ou de diffusion (22) étant situés au niveau de ladite face de réflexion (11).

7. Dispositif selon la revendication 6 dans lequel lesdits motifs optiques de réflexion (20) et/ou lesdits motifs optiques de diffusion (22) sont, respectivement, disposés en quinconce.

8. Dispositif selon l'une des revendications 6 ou 7 dans lequel lesdits motifs de réflexion (20) et/ou lesdits motifs de diffusion (22) sont positionnés de façon matricielle.

9. Dispositif selon la revendication 8 dans lequel une matrice des motifs optiques de réflexion (20) et une matrice des motifs optiques de diffusion (22) sont imbriquées l'une dans l'autre.

10. Dispositif selon l'une quelconques des revendications précédentes dans lequel lesdits motifs optiques de réflexion (20) comprennent des prismes réfléchissant (27) formés dans ledit guide (3).

11. Dispositif selon l'une quelconque des revendications précédentes dans lequel lesdits motifs de diffusion (22) comprennent des altérations localisées (33) dudit guide (3).

12. Dispositif selon la revendication précédente, **caractérisé en ce que** les altérations (33) sont en forme de creux formés dans le guide.

13. Dispositif selon la revendication précédente, **caractérisé en ce que** les creux présentent une pluralité de micro-aspérités sur au moins une partie de leur surface.

14. Dispositif selon la revendication précédente, **caractérisé en ce que** les micro-aspérités présentent des formes aléatoires.

15. Dispositif selon l'une des revendications 1 à 10, **caractérisé en ce que** les motifs de diffusions sont imprimés sur le guide.

16. Dispositif selon la revendication précédente, **caractérisé en ce que** les motifs de diffusions comprennent une couche d'encre diffusive.

17. Lanterne et/ou feu de stop de véhicule automobile comprenant un dispositif lumineux selon l'une quelconque des revendications précédentes.

18. Eclairage intérieur, notamment plafonnier, de véhicule automobile comprenant un dispositif lumineux selon l'une quelconque des revendications précédentes.

## Patentansprüche

1. Beleuchtungs- und/oder Signalgebungsvorrichtung für ein Kraftfahrzeug, wobei die Vorrichtung eine Lichtquelle (1), die ein Lichtbündel zu emittieren vermag, und einen Lichtleiter (3) umfasst und so ausgebildet ist, dass die Ausbreitung eines Lichtbündels in dem Lichtleiter (3) möglich ist, wobei der Lichtleiter umfasst:
- eine Lichtaustrittsfläche;
- eine Vielzahl optischer Muster (20) zur Reflexion sogenannter gelenkter Lichtbündelanteile (17) durch die Austrittsfläche hindurch in einer bevorzugten Richtung; und
- eine Vielzahl optischer Muster (22) zur Streuung sogenannter gestreuter Lichtbündelanteile (19) durch die Austrittsfläche hindurch,
wobei sich die streuenden Lichtanteile von den gelenkten Lichtanteilen unterscheiden, wobei die Vorrichtung **dadurch gekennzeichnet ist, dass** die optischen Muster Reflexionsmittel und Streumittel sind, bei denen es sich in Wirklichkeit um Auskopplungsmittel handelt, und die solchermaßen verteilt sind, dass sich ihre Wirkungen vereinigen, wobei es die Auskopplungsmittel erlauben, gleichzeitig die gewünschte Photometrie insbesondere in der erforderlichen Richtung, zum Beispiel in der Fahrzeugachse, und einen verbreiterten Sichtwinkel zu erhalten, und dass der Lichtleiter und die Lichtquelle in einem von einer Scheibe verschlossenen Gehäuse angeordnet sind, durch die der Lichtleiter ganz oder teilweise sichtbar ist.

2. Vorrichtung nach Anspruch 1,
bei der die Reflexionsmuster (20) und die Streumuster (22) abwechselnd angeordnet sind.

3. Vorrichtung nach einem der Ansprüche 1 oder 2,
bei der die Reflexionsmuster (20) und/oder die Streumuster (22) durch eine Materialvertiefung des Lichtleiters (3) gebildet sind.

4. Vorrichtung nach einem der vorhergehenden Ansprüche,
bei der die optischen Streumuster (22) neben den optischen Reflexionsmustern (20) gebildet sind.

5. Vorrichtung nach einem der Ansprüche 1 bis 3,
bei der die optischen Streumuster (22) auf den optischen Reflexionsmustern (20) gebildet sind.

6. Vorrichtung nach einem der vorhergehenden Ansprüche,
bei der der Lichtleiter (3) von einer Leitfläche (4) gebildet ist, welche eine erste Seite aufweist, die die Austrittsfläche (9) der gelenkten (17) und gestreuten (19) Lichtanteile bildet, und eine der Austrittsfläche (9) entgegengesetzt angeordnete zweite Seite (11), die eine Fläche zur Reflexion des Lichtbündels bildet, wobei die optischen Reflexionsmuster (20) und/oder Streumuster (22) in Höhe der Reflexionsfläche (11) angeordnet sind.

7. Vorrichtung nach Anspruch 6,
bei der die optischen Reflexionsmuster (20) und/oder die optischen Streumuster (22) jeweils versetzt angeordnet sind.

8. Vorrichtung nach einem der Ansprüche 6 oder 7,
bei der die Reflexionsmuster (20) und/oder die Streumuster (22) matrixartig angeordnet sind.

9. Vorrichtung nach Anspruch 8,
bei der eine Matrix aus optischen Reflexionsmustern (20) und eine Matrix aus optischen Streumustern (22) sich gegenseitig überlappend angeordnet sind.

10. Vorrichtung nach einem der vorhergehenden Ansprüche,
bei der die optischen Reflexionsmuster (20) im Lichtleiter (3) gebildete Reflexionsprismen (27) umfassen.

11. Vorrichtung nach einem der vorhergehenden Ansprüche,
bei der die Streumuster (22) lokale Veränderungen (33) des Lichtleiters (3) umfassen.

12. Vorrichtung nach dem vorhergehenden Anspruch,
**dadurch gekennzeichnet, dass** die Veränderungen (33) die Form von im Lichtleiter gebildeten Vertiefungen aufweisen.

13. Vorrichtung nach dem vorhergehenden Anspruch,
**dadurch gekennzeichnet, dass** die Vertiefungen eine Vielzahl kleinster Unebenheiten auf wenigstens einem Teil ihrer Oberfläche aufweisen.

14. Vorrichtung nach dem vorhergehenden Anspruch,
**dadurch gekennzeichnet, dass** die kleinsten Unebenheiten zufällige Formen haben.

15. Vorrichtung nach einem der Ansprüche 1 bis 10,
**dadurch gekennzeichnet, dass** die Streumuster auf den Lichtleiter gedruckt sind.

16. Vorrichtung nach dem vorhergehenden Anspruch,
**dadurch gekennzeichnet, dass** die Streumuster eine streuungsfähige Tintenschicht umfassen.

17. Schlusslicht und/oder Bremslicht für Kraftfahrzeuge mit einer Leuchtvorrichtung nach einem der vorhergehenden Ansprüche.

18. Innenraumbeleuchtung, insbesondere Deckenleuchte, für Kraftfahrzeuge mit einer Leuchtvorrichtung nach einem der vorhergehenden Ansprüche.

## Claims

1. Lighting and/or signalling light device for a motor vehicle, said device comprising a light source (1) able to emit a light beam and an optical guide (3) configured to allow the propagation of said light beam in said guide (3), said guide comprising:
- an exit face for the light;
- a plurality of optical patterns (20) for reflecting so-called directed fractions (17) of the light beam through the exit face, in a favoured direction; and
- a plurality of optical patterns (22) for diffusion of so-called diffused fractions (19) of the light beam through the exit face,
the diffused fractions being distinct from the directed fractions, the device being **characterised in that** said optical patterns are reflective means and diffusing means that are in fact decoupling means, and which are distributed so that the effects thereof combine, these decoupling means making it possible to obtain simultaneously the required photometry, in particular in the necessary direction, for example in the axis of the vehicle, and a broadened visibility angle; and **in that** said guide and said light source are disposed in a housing closed by a lens allowing said guide to be seen, in whole or in part.

2. Device according to claim 1, in which said reflection patterns (20) alternate with said diffusion patterns (22).

3. Devices according to either of claims 1 or 2, in which said reflection (20) and/or diffusion (22) patterns are formed by a hollowing of material of said guide (3).

4. Device according to any of the preceding claims, in which the optical diffusion patterns (22) are formed alongside the optical reflection patterns (20).

5. Device according to any of claims 1 to 3, in which the optical diffusion patterns (22) are formed on the optical reflection patterns (20).

6. Device according to any of the preceding claims, in which said guide (3) consists of a guidance sheet (4) comprising a first face forming said exit face (9) for said directed (17) and diffused (19) fractions, and a second face (11), opposite to the exit face (9), forming a face for reflection of the light beam, said reflection (20) and/or diffusion (22) optical patterns being situated at said reflection face (11).

7. Device according to claim 6, in which said optical reflection patterns (20) and/or optical diffusion patterns (22) are respectively disposed in a zigzag.

8. Device according to one of claims 6 or 7, in which said reflection patterns (20) and/or said diffusion patterns (22) are positioned in a matrix.

9. Device according to claim 8, in which a matrix of optical reflection patterns (20) and a matrix of optical diffusion patterns (22) are interleaved with each other.

10. Device according to any of the preceding claims, in which said optical reflection patterns (20) comprise reflective prisms (27) formed in said guide (3).

11. Device according to any of the preceding claims, in which said diffusion patterns (22) comprise localised alternations (33) of said guide (3).

12. Device according to the preceding claim, **characterised in that** the alternations (33) are in the form of hollows formed in the guide.

13. Device according to the preceding claim, **characterised in that** the hollows have a plurality of microroughnesses on at least a part of their surface.

14. Device according to the preceding claim, **characterised in that** the microroughnesses have random shapes.

15. Device according to one of claims 1 to 10, **characterised in that** the diffusion patterns are printed on the guide.

16. Device according to the preceding claim, **characterised in that** the diffusion patterns comprise a layer of diffusive ink.

17. Sidelight and/or brake light for a motor vehicle, comprising a light device according to any of the preceding claims.

18. Interior lighting, in particular in the roof, for a motor vehicle, comprising a light device according to any of the preceding claims.
